# EUROPEAN PATENT SPECIFICATION

(11) **EP 3 809 814 B1**
(45) Date of publication and mention of the grant of the patent: **09.03.2022**
(21) Application number: 18830438.0
(22) Date of filing: 17.12.2018
(51) Int. Cl.: A01D 46/247

(54) **FRUIT HARVESTING TOOL**
OBSTERNTEWERKZEUG
OUTIL DE RÉCOLTE DE FRUITS

(30) Priority: 21.06.2018 DE 102018004931
(43) Date of publication of application: 28.04.2021
(73) Proprietor: HUSQVARNA AB, 561 82 Huskvarna (SE)
(72) Inventor: KOHL, Peter, 89257 Illertissen (DE); RENNER, Thomas, 89079 Ulm (DE)
(74) Representative: Finkele, Rolf
(86) International application number: PCT/EP2018/085233
(87) International publication number: WO 2019/242869

(56) References cited:
- CA-A1- 2 233 509
- US-A- 3 323 297
- US-A- 4 187 665
- US-A- 5 724 799

## Description

### TECHNICAL FIELD

The present disclosure relates to a harvesting tool, and more particularly to a hand-held fruit harvesting tool.

### BACKGROUND

Harvesting tools have been well known in the art for their use in facilitating harvesters to pluck and retrieve produce, for example, fruits from branches of shrubs and trees. In some cases, these harvesting tools have been designed for use in plucking fruits from shrubs alone. In other cases, some of these harvesting tools have been designed to allow harvesters to pluck fruits that are located on trees alone, and these trees may typically be of a height greater than that usually associated with shrubs.

Further, many harvesting tools currently available in the market have been known to include a basket, or other portions, for example, prongs, that largely exhibit a wireframe configuration. Due to this wireframe configuration of the basket or such other portions, these harvesting tools may be susceptible to getting 'caught' in the tortuous branches of shrubs or trees when such harvesting tools are maneuvered by harvesters for gaining access to the fruit/s that are to be plucked from the shrubs or trees.

Furthermore, with use of many previously known configurations of harvesting tools, it has been felt that upon retrieving fruits into the basket, portions of the harvesting tool other than the basket, for instance, a handle extending from the basket may experience torque owing to a lateral and/or distal positioning of such portions with respect to an axis of the basket along which the weight of the retrieved fruits typically acts. This torque may cause an unergonomic handling of the tool by harvesters, and over time, or with repeated use of such harvesting tools, this torque may also manifest into deteriorating a structural integrity of the harvesting tool itself.

CA2233509 discloses a fruit harvesting tool comprising a container having a circumferential wall disposed about a central axis and having a closed bottom end and a top end defining a perimeter with the circumferential wall, a top portion of the container comprising the top end and at least a portion of the circumferential wall adjacent to the top end being adapted to define an arcuate opening extending partway along the perimeter; a handle member connected to the container and disposed parallel to the central axis.

US-A-3223297 disclose an adapter for a handle member protruding from an outer surface of the closed bottom end of the container and the adapter is parallel to the central axis of the container.

Hence, there is a long felt but unresolved need for a harvesting tool that provides an improved amount of versatility in that, the harvesting tool should be conveniently usable for plucking and retrieving fruits that are located at different heights while having an improved amount of structural integrity, and that which is ergonomic to use by harvesters.

### SUMMARY

In view of the above, it is an objective of the present invention to solve or at least reduce the drawbacks discussed above. The objective is at least partially achieved by a fruit harvesting tool, according to an embodiment of the present invention. The fruit harvesting tool includes a container that has a circumferential wall disposed about a central axis. The container also has a closed bottom end and a top end that defines a perimeter with the circumferential wall. A top portion of the container, comprising the top end and at least a portion of the circumferential wall adjacent to the top end, is adapted to define an arcuate opening extending partway along the perimeter. Further, the fruit harvesting tool also includes a first handle member that is connected to the container and disposed parallel to the central axis.

Furthermore, the fruit harvesting tool also includes an adapter for a second handle member. According to an embodiment herein, the adapter is selectively connected to the second handle member. The adapter protrudes from an outer surface of the closed bottom end of the container and is located parallel to the central axis of the container. According to a preferred embodiment of the present invention, the adapter is disposed in alignment with the central axis. With implementation of the preferred embodiment, *i.e.,* by providing the adapter in alignment with the central axis, and with the second handle member being connected to the adapter, it is envisioned that during a harvesting activity or otherwise, when the fruit harvesting tool is typically held upright, a weight associated with harvested fruits acts substantially along the central axis of the container. Consequently, forces from this weight would be transferred along the second handle member for being supported by the harvester's hand causing little or no torque to be experienced by the fruit harvesting tool.

According to an embodiment of the present invention, a bottom portion of the container is adapted to define a recess parallel to the central axis of the container. Further, the first handle member is located within this recess and disposed parallel to the central axis of the container. During a harvesting activity or otherwise, when the fruit harvesting tool is typically held upright, the weight of the harvested fruits that acts along the central axis is offset with the first handle member. Although the first handle member is offset from the central axis, a distance between the central axis and the first handle member is relatively small, for example, less than 15 centimeters, and therefore negligible. Consequently, a large component of the forces from this weight of the harvested fruits could still be supported by the harvester's hand that grips the first handle member while causing as little torque as possible to be experienced about the first handle member of the fruit harvesting tool.

On the contrary, when the fruit harvesting tool is held in a horizontal position, for example, when transporting the harvested fruits, the weight of the harvested fruits acts laterally with respect to the central axis. The forces from this weight would then become incident on the first handle member in a perpendicular manner, and consequently, the harvester's hand that grips the first handle member easily supports all the forces from this weight thereby causing no torque to be experienced by the first handle member, or any other adjacent portion of the fruit harvesting tool.

According to an embodiment of the present invention, a first portion of the arcuate opening is disposed parallel to the central axis while a second portion of the arcuate opening is disposed lateral with respect to the central axis. Further, the top end of the container, adjacent to the arcuate opening, is adapted to engage with a tined fruit plucking attachment. With implementation of this embodiment, forces encountered by the tined fruit plucking attachment, and the fruit harvesting tool in general, can be transferred substantially along the central axis of the container thereby causing little or no torque to the experienced by the fruit harvesting tool and consequently maintaining a stability of the fruit harvesting tool in use during a harvesting activity.

According to an embodiment of the present invention, the bottom portion of the container includes a plurality of openings defined in the circumferential wall such that adjacent openings are arranged at a pre-determined distance from one another. These openings may provide visibility to the harvester during a harvesting activity while also allowing the harvester to determine a fill level of the container.

According to an embodiment of the present invention, the container consists of a basket forming the bottom portion of the container, and a lid forming the top portion of the container. Moreover, the lid is connected to the basket. According to one embodiment of the present invention, the first handle member is formed integrally with the lid. According to another embodiment of the present invention, the first handle member is formed integrally with the basket. Also, according to an embodiment of the present invention, the adapter for the second handle member is formed integrally with the lid. According to another embodiment of the present invention, the adapter is formed integrally with the basket. Manufacturers can therefore, manufacture the fruit harvesting tool according to the present invention with use of any of the foregoing four embodiments disclosed herein.

According to an embodiment of the present invention, the fruit harvesting tool is made of a thermoplastic material. Moreover, the fruit harvesting tool may be manufactured using an injection molding process. It is hereby envisioned that by using a thermoplastic material and manufacturing the fruit harvesting tool using an injection molding process, the cost of manufacturing the fruit harvesting tool would be economical compared to other methods known to persons skilled in the art.

Other features and aspects of this invention will be apparent from the following description and the accompanying drawings.

### BRIEF DESCRIPTION OF THE DRAWINGS

The invention will be described in more detail with reference to the enclosed drawings, wherein:
**FIG. 1** shows a side perspective view of a fruit harvesting tool having a container, in accordance with an embodiment of the present invention;
**FIG. 2** shows a side view of the fruit harvesting tool with use of a first handle member, in accordance with an embodiment of the present invention;
**FIG. 3** shows a side view of the fruit harvesting tool with addition of a second handle member, in accordance with an embodiment of the present invention;
**FIG. 4** shows a side view of the fruit harvesting tool with the container being disposed in a horizontal position, in accordance with an embodiment of the present invention;
**FIG. 5** shows another side perspective view of the fruit harvesting tool in a state of operation just prior to harvesting a fruit, in accordance with an embodiment of the present invention;
**FIG. 6** shows a bottom perspective view of the fruit harvesting tool from **FIG. 5****,** in accordance with an embodiment of the present invention;
**FIG. 7** shows a side perspective view of an unassembled fruit harvesting tool from **FIG. 1** that has been manufactured in accordance with an embodiment of the present invention;
**FIGS. 8-9** show assembled and exploded views of the fruit harvesting tool that has been manufactured in accordance with another embodiment of the present invention;
**FIGS. 10-11** show assembled and exploded views of the fruit harvesting tool that has been manufactured in accordance with yet another embodiment of the present invention; and
**FIG. 12** shows a sectional view of the fruit harvesting tool that has been manufactured in accordance with yet another embodiment of the present invention.

### DESCRIPTION OF EMBODIMENTS

The present invention will be described more fully hereinafter with reference to the accompanying drawings, in which example embodiments of the invention incorporating one or more aspects of the present invention are shown. This invention may, however, be embodied in many different forms and should not be construed as being limited to the embodiments set forth herein; rather, these embodiments are provided so that this disclosure will be thorough and complete, and will fully convey the scope of the invention to those skilled in the art. For example, one or more aspects of the present invention can be utilized in other embodiments and even other types of structures. In the drawings, like numbers refer to like elements.

Certain terminology is used herein for convenience only and is not to be taken as a limitation on the invention. For example, "upper", "lower", "front", "rear", "side", "longitudinal", "lateral", "transverse", "upwards", "downwards", "forward", "backward", "sideward", "left," "right," "horizontal," "vertical," "upward", "inner", "outer", "inward", "outward", "top", "bottom", "higher", "above", "below", "central", "middle", "intermediate", "between", "end", "adjacent", "proximate", "near", "distal", "remote", "radial", "circumferential", or the like, merely describe the configuration shown in the Figures. Indeed, the components may be oriented in any direction and the terminology, therefore, should be understood as encompassing such variations unless specified otherwise.

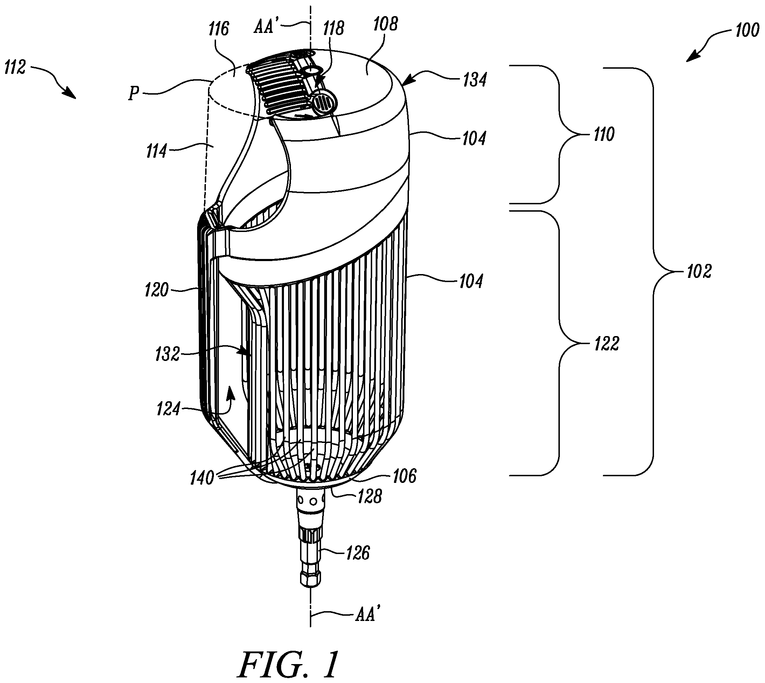

**FIG. 1** shows a perspective view of a fruit harvesting tool **100,** according to an embodiment of the present invention. As shown, the fruit harvesting tool **100** includes a container **102** that has a circumferential wall **104** disposed about a central axis **AA'.** The container **102** also has a closed bottom end **106** and a top end **108.** The top end **108** and the circumferential wall **104** together define a perimeter **P** therebetween.

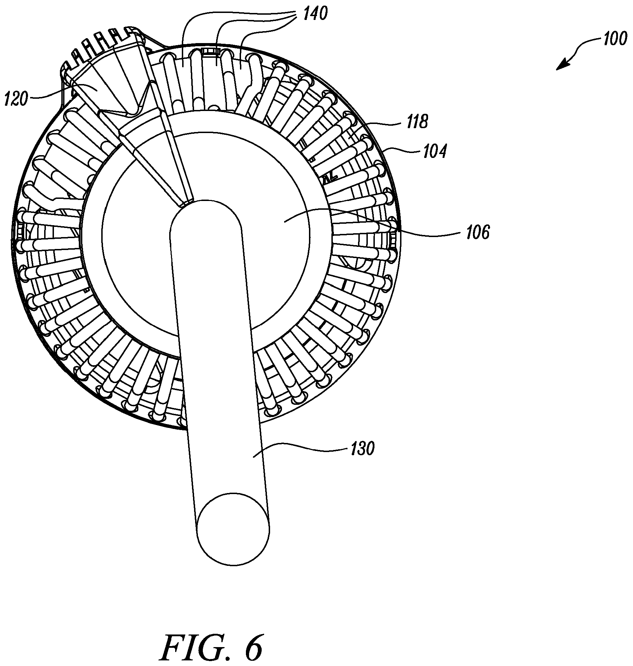

A top portion **110** of the container **102,** comprising the top end **108** and at least a portion of the circumferential wall **104** adjacent to the top end **108,** is adapted to define an arcuate opening **112** extending partway along the perimeter **P.** According to an embodiment of the present invention as shown in **FIG. 1****,** a first portion **114** of the arcuate opening **112** is disposed parallel to the central axis **AA'** while a second portion **116** of the arcuate opening **112** is disposed lateral with respect to the central axis **AA'.** Further, the top end **108** of the container **102,** adjacent to the arcuate opening **112,** is adapted to engage with a tined fruit plucking attachment **118.** This arcuate opening **112** is adapted *i.e.,* sized and/or shaped to receive a fruit therein as shown in **FIG. 6** so that the fruit can be plucked by the tined fruit plucking attachment **118** and retrieved into the container **102.**

Further, the fruit harvesting tool **100** also includes a first handle member **120** that is connected to the container **102** and disposed parallel to the central axis **AA'.** In a preferred embodiment as shown in **FIG. 1****,** a bottom portion **122** of the container **102** is adapted to define a recess **124** that is parallel to the central axis **AA'** of the container **102.** The first handle member **120** is located within this recess **124** and disposed parallel to the central axis **AA'** of the container **102.**

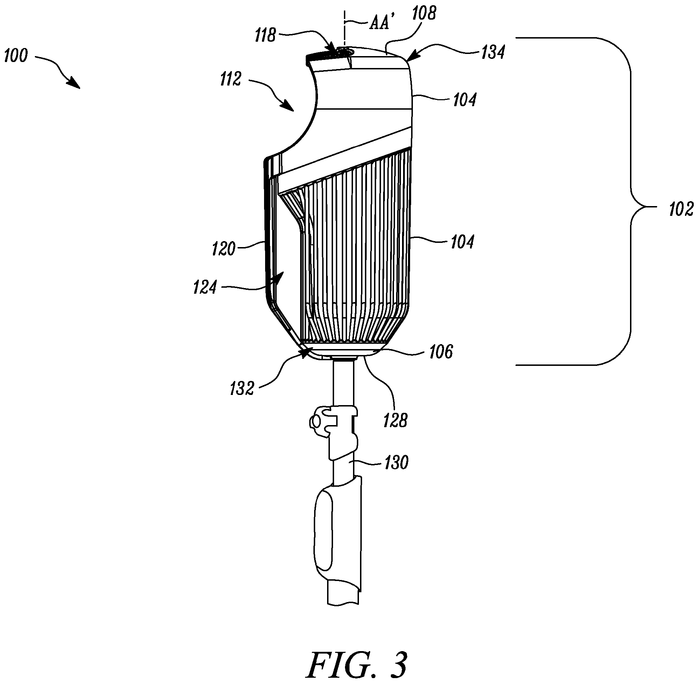

Furthermore, the fruit harvesting tool **100** also includes an adapter **126.** The adapter **126** protrudes from an outer surface **128** of the closed bottom end **106** of the container **102** and is located parallel to the central axis **AA'** of the container **102.** In a preferred embodiment as shown in **FIG. 1****,** the adapter **126** is disposed in alignment with the central axis **AA'.** A second handle member **130** may be optionally connected to this adapter **126** as shown best in **FIG. 3****.** The second handle member **130** may be, for example, a telescopic handle that can provide an extension for harvesters to reach fruits that are located at a height from the ground, for example, fruits that are located on trees.

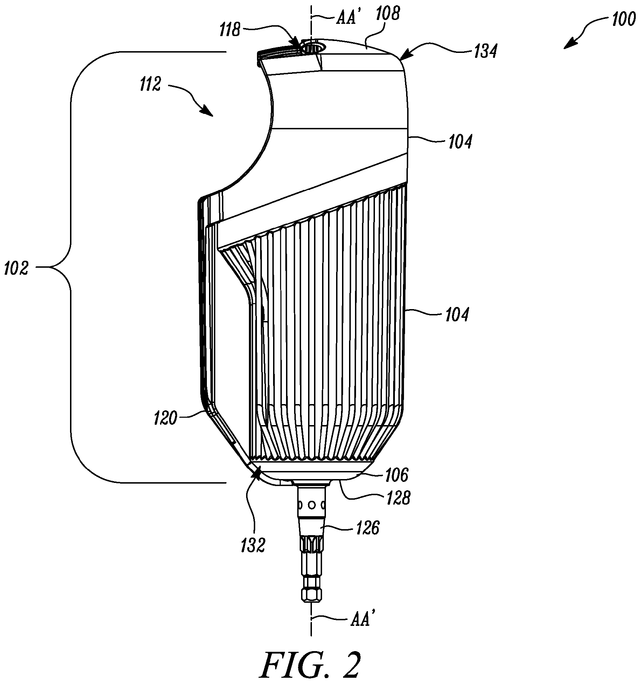

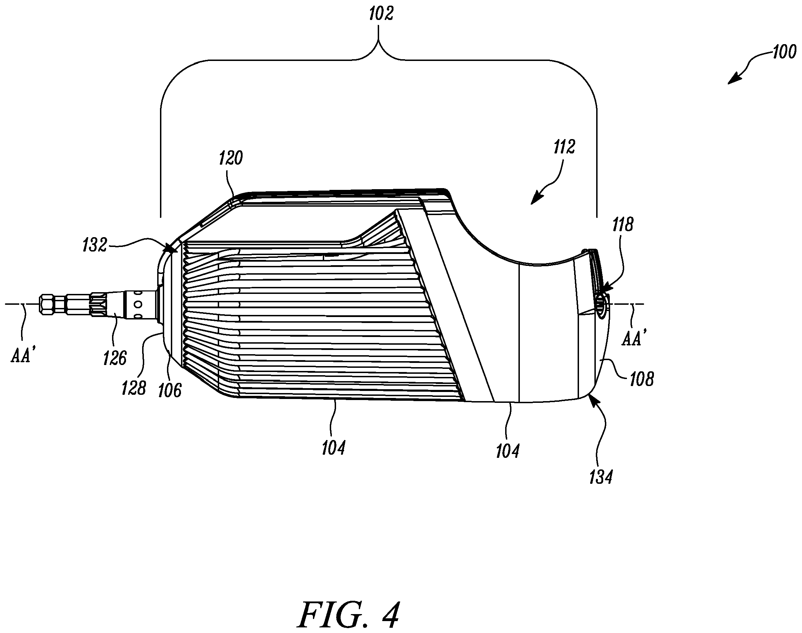

Although it is disclosed herein that the fruit harvesting tool **100** can be used with the second handle member **130,** the second handle member **130** may not always be needed, for instance, when the fruit harvesting tool **100** is used to harvest fruits from a height that is easily accessible by a harvester's hand. In an example, this fruit harvesting tool **100** may be used to harvest berries that may be located on a shrub having a height usually less than that of fruits that are located on trees. Use of the fruit harvesting tool **100** in which a harvester's hand is shown gripping the first handle member **120** is diagrammatically illustrated in the view of **FIGS. 2** and **4****.**

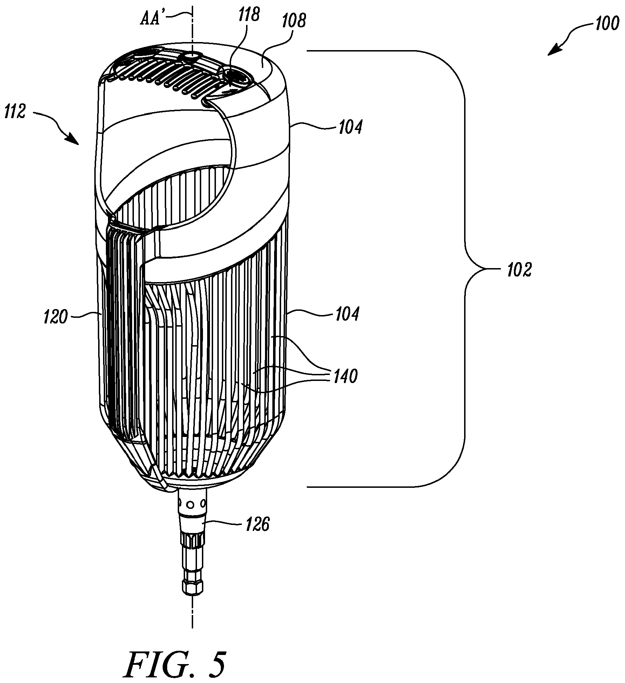

Also, as shown in **FIGS. 1** through **11****,** the container **102** is generally cylindrical in shape. However, other shapes including, but not limited to, tubular shapes may be contemplated in lieu of the cylindrical shape disclosed herein. For example, the container **102** may have a generally cubical shape, a generally cuboidal shape, or any other suitable polyhedral shape. It may be noted that the term "generally" has been used herein in precedence to the shape of the container **102** and so that it may be understood by persons skilled in the art that the container **102** may be formed to exhibit any of the shapes specified herein in as general a manner as possible, with the only exception being that a cross-section of the circumferential wall **104** forming the container **102** would vary for some distance partway along the central axis **AA'** of the container **102** for defining the recess **124.** Therefore, persons skilled in the art will appreciate that many shapes can be contemplated to form the container **102** such that the container **102** is configured to define the recess **124** for facilitating an inclusion of the first handle member **120** within the recess **124.** This way, the first handle member **120** can be disposed within a gross volume that is generally representative of the container **102** herein.

Moreover, although the first handle member **120** is disclosed as being disposed within the gross volume of the container **102,** it may be noted that the first handle member **120** beneficially serves as an optical guide to the position of the arcuate opening **112** and the fruit that is to be harvested when the container **102** is raised to a height above the user's height with the help of the second handle member **130** as best shown in **FIGS. 3** and **6** respectively.

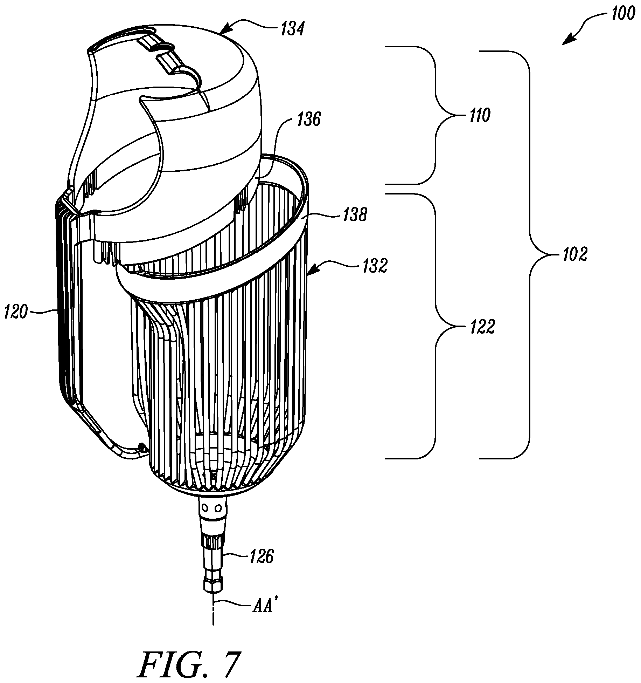

Further, as shown in **FIGS. 1** through **11**, the container **102** consists of a basket **132** forming the bottom portion **122** of the container **102,** and a lid **134** that forms the top portion **110** of the container **102.** In these configurations, the lid **134** is connected to the basket **132,** preferably, in a releasable manner. Many arrangements are known to persons skilled in the art for establishing the releasable engagement of the lid **134** to the basket **132.** For example, proximal lip portions **136, 138** of the lid **134** and the basket **132** as shown best in **FIG. 7** may be configured to define one or more inter-fitting snap fit arrangements not shown including, but not limited to, catches, notches, grooves, and the like. These and other types of arrangements may be contemplated by persons skilled in the art for securing the lid **134** to the basket 132**.**

Furthermore, as shown in **FIGS. 1** through **11****,** the bottom portion **122** of the container **102** comprises a plurality of openings **140** that are defined in the circumferential wall **104.** As illustrated in **FIGS. 1** through **11****,** these openings **140** are formed in the shape of slits. However, other shapes may be contemplated in lieu of the slits to form the openings **140** disclosed herein. For example, the openings **140** may be of a circular shape, a square shape, or other shapes commonly known in the art.

Moreover, these openings **140** are defined such that adjacent openings **140** are arranged at a pre-determined distance from one another. It will be appreciated that a size of each opening **140** may be pre-defined to provide visibility of the fruit, that is to be harvested, to the harvester as shown in **FIG. 6****.** As such, these openings **140** also allow the harvester to visually observe a fill level of the harvested fruits that are within the container **102** while the circumferential wall **104** prevents such harvested fruits to pass through these openings **140** and fall from the container **102.**

In accordance with the embodiment of the container **102** illustrated in **FIG. 1****,** an exploded view of the container **102** is illustrated in **FIG. 7****.** Referring to **FIG. 7****,** it can be noted that the first handle member **120** is formed integrally with the lid **134** while the adapter **126** is formed integrally with the basket **132.** In this configuration of the container **102,** it can also be contemplated to additionally, or optionally, provide a securement mechanism at a bottom end of the first handle member **120** and the basket **132** respectively so that the first handle member **120** can be releasably connected with the basket **132.**

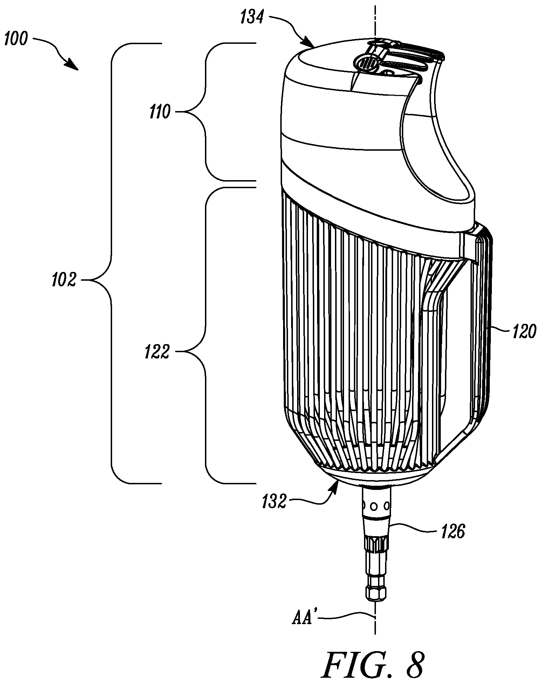

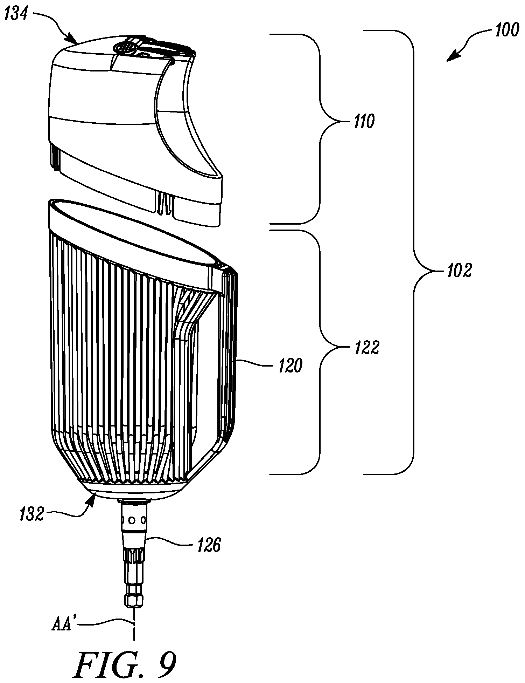

Referring to **FIGS. 8** and **9****,** assembled and exploded views of the fruit harvesting tool **100** have been illustrated with the container **102** being manufactured in accordance with another embodiment. As shown, in this embodiment, both the first handle member **120** and the adapter **126** are integrally formed with the basket **132.**

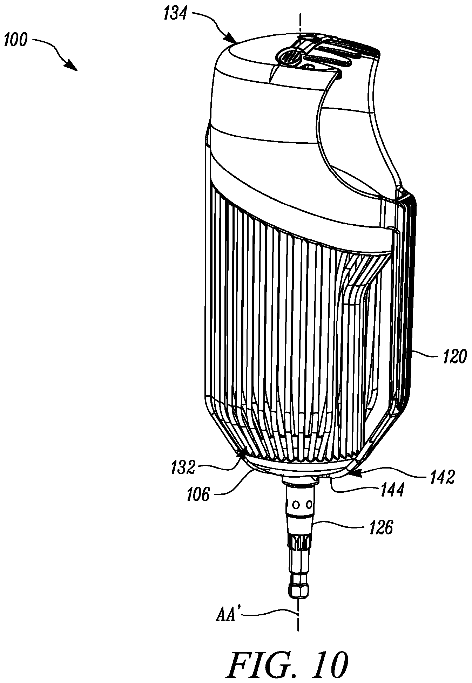

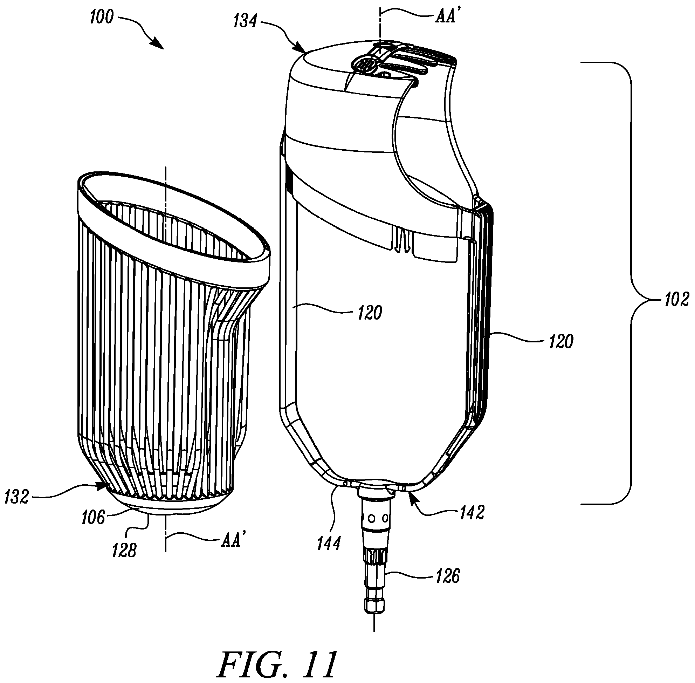

Referring to **FIGS. 10** and **11****,** assembled and exploded views of the fruit harvesting tool **100** have been illustrated with the container **102** being manufactured in accordance with another embodiment. As shown, in this embodiment, both the first handle member **120** and the adapter **126** are integrally formed with the lid **134.** In fact, as shown best in **FIG. 11****,** the lid **134** may be manufactured to include a pair of first handle members **120** that depend downwardly from the lip. Moreover, such a pair of first handle members **120** may be configured to join into one another and form a bridge portion **142.** This bridge portion **142** may be located at a height corresponding to a position at which the closed bottom end **106** of the basket **132** terminates. Further, the adapter **126** extends from a bottom surface **144** of the bridge portion **142** so as to be disposed facing away from the lid **134** and the basket **132.** Furthermore, as disclosed earlier herein, this adapter **126** would be disposed parallel to the central axis **AA'.** Preferably, as shown in the view of **FIG. 10****,** this adapter **126** is disposed in alignment with the central axis **AA'.**

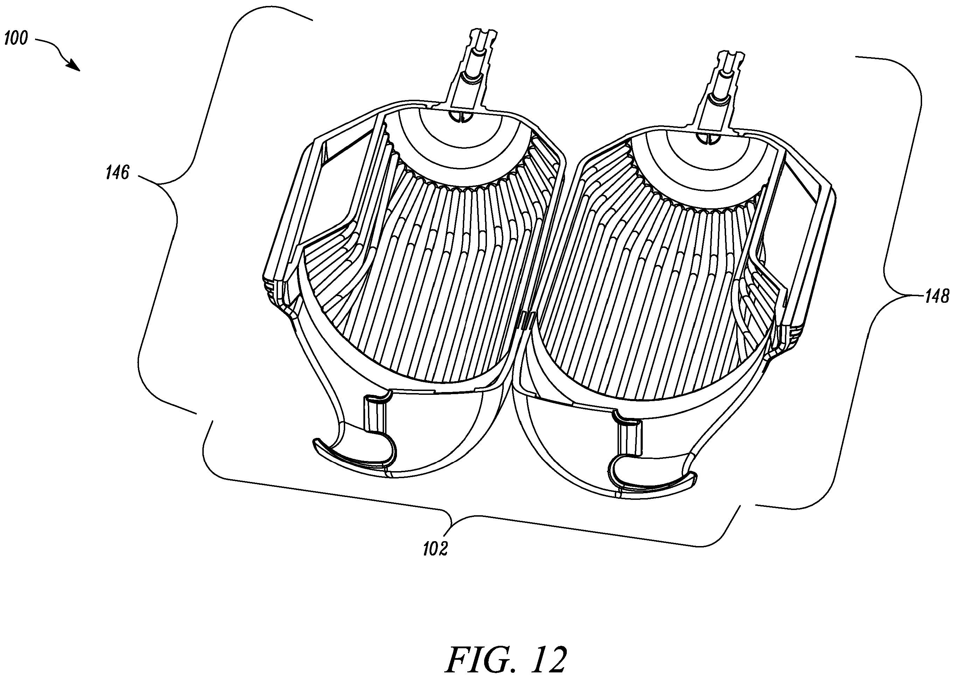

Referring to **FIG. 12****,** a sectional view of the fruit harvesting tool **100** is illustrated in which the container **102** is manufactured in accordance with another embodiment of the present invention. As shown, the container **102** is formed such that the container **102** is devoid of separable portions such as the lid **134** and/or the basket **132** depicted in the embodiments of **FIGS. 1** to **11****.** Rather, in the embodiment of the fruit harvesting tool **100** depicted in **FIG. 12****,** the container **102** is formed from two halves **146, 148** that have been shown in an unconnected state. The two halves **146, 148** may be connected to each other by connection means commonly known in the art, for example, a hinge joint not shown, or may even be joined together using an adhesive.

In accordance with an embodiment herein, the fruit harvesting tool **100** of the present invention is made, preferably, of a thermoplastic material. Moreover, the fruit harvesting tool **100** may be manufactured using an injection molding process. It is hereby envisioned that by using a thermoplastic material and manufacturing the fruit harvesting tool **100** using an injection molding process, the cost of manufacturing the fruit harvesting tool **100** would be economical compared to other methods commonly known in the art.

Although the fruit harvesting tool **100** is disclosed as being made from a thermoplastic material, it is to be noted that a type of material used is not limiting of the scope of the present invention. Persons skilled in the art will acknowledge that any suitable material may be used depending on specific requirements of an application.

According to an embodiment of the present invention, the geometries of the fruit plucking attachment **118** and the top end **108** of the container **102** would remain complimentary relative to one another such that the integration of the fruit plucking attachment **118** to the top end **108** of the container **102** would provide the fruit harvesting tool **100** of the present invention for its intended use in harvesting fruits. In an exemplary embodiment, the fruit plucking attachment **118** is manufactured as an integral part of the top end **108** of the container **102,** preferably out of one single material. Alternatively, the fruit plucking attachment **118** may be provided as a separate part.

In the drawings and specification, there have been disclosed preferred embodiments and examples of the invention and, although specific terms are employed, they are used in a generic and descriptive sense only and not for the purpose of limitation of the scope of the invention being set forth in the following claims.

### LIST OF ELEMENTS

- **100**: fruit harvesting tool
- **102**: container
- **104**: circumferential wall
- **106**: closed bottom end of container
- **108**: top end of container
- **110**: top portion of container
- **112**: arcuate opening
- **114**: first portion of arcuate opening
- **116**: second portion of the arcuate opening
- **118**: fruit plucking attachment
- **120**: first handle member
- **122**: bottom portion of the container
- **124**: recess
- **126**: adapter
- **128**: outer surface of closed bottom end of container
- **130**: second handle member
- **132**: basket
- **134**: lid
- **136**: lip portion of lid
- **138**: lip portion of basket
- **140**: openings
- **142**: bridge portion
- **144**: bottom surface of bridge portion
- **146**: first half of container
- **148**: second half of container
- **P**: perimeter
- **AA'**: central axis of container

## Claims

1. A fruit harvesting tool **(100)** comprising:
a container **(102)** having a circumferential wall **(104)** disposed about a central axis **(AA')** and having a closed bottom end **(106)** and a top end **(108)** defining a perimeter **(P)** with the circumferential wall **(104),**
a top portion **(110)** of the container **(102)** comprising the top end **(108)** and at least a portion of the circumferential wall **(104)** adjacent to the top end **(108)** being adapted to define an arcuate opening **(112)** extending partway along the perimeter **(P);**
a first handle member **(120)** connected to the container **(102)** and disposed parallel to the central axis **(AA');** and
**characterized in that**: an adapter **(126)** for a second handle member **(130)** protrudes from an outer surface **(128)** of the closed bottom end **(106)** of the container **(102)** and the adapter **(126)** is parallel to the central axis **(AA').**

2. The fruit harvesting tool **(100)** according to claim 1, **characterized in that**, the adapter **(126)** is disposed in alignment with the central axis **(AA').**

3. The fruit harvesting tool **(100)** according to any of the preceding claims, **characterized in that**, a bottom portion **(122)** of the container **(102)** is adapted to define a recess **(124)** parallel to the central axis **(AA')** of the container **(102).**

4. The fruit harvesting tool **(100)** according to claim 3, **characterized in that**, the first handle member **(120)** is located within the recess **(124)** and disposed parallel to the central axis **(AA')** of the container **(102).**

5. The fruit harvesting tool **(100)** according to any of the preceding claims, **characterized in that**, the adapter **(126)** is selectively connected to the second handle member **(130).**

6. The fruit harvesting tool **(100)** according to any of the preceding claims, **characterized in that** a first portion **(114)** of the arcuate opening **(112)** is disposed parallel to the central axis **(AA')** while a second portion **(116)** of the arcuate opening **(112)** is disposed lateral with respect to the central axis **(AA').**

7. The fruit harvesting tool **(100)** according to any of the preceding claims, **characterized in that**, the fruit harvesting tool **(100)** is made of a thermoplastic material.

8. The fruit harvesting tool **(100)** according to claim 7, **characterized in that**, the fruit harvesting tool **(100)** is manufactured using an injection molding process.

9. The fruit harvesting tool **(100)** according to any of the preceding claims, **characterized in that**, a bottom portion **(122)** of the container **(102)** comprises a plurality of openings defined in the circumferential wall **(104)** such that adjacent openings are arranged at a pre-determined distance from one another.

10. The fruit harvesting tool **(100)** according to claim 9, **characterized in that**, the container **(102)** consists of:
a basket **(132)** forming the bottom portion **(122)** of the container **(102);** and
a lid **(134)** forming the top portion **(110)** of the container **(102).**

11. The fruit harvesting tool **(100)** according to claim 10, **characterized in that**, the lid **(134)** is connected to the basket **(132).**

12. The fruit harvesting tool **(100)** according to claim 10, **characterized in that**, the first handle member **(120)** is formed integrally with the lid **(134).**

13. The fruit harvesting tool **(100)** according to claim 10, **characterized in that**, the first handle member **(120)** is formed integrally with the basket **(132).**

14. The fruit harvesting tool **(100)** according to claim 10, **characterized in that**, the adapter **(126)** is formed integrally with the lid **(134).**

15. The fruit harvesting tool **(100)** according to any of the preceding claims, **characterized in that**, the top end **(108)** of the container **(102)** adjacent to the arcuate opening **(112)** is adapted to engage with a tined fruit plucking attachment **(118).**

## Patentansprüche

1. Obsterntewerkzeug **(100),** umfassend:
einen Behälter **(102)** mit einer um eine Mittelachse **(AA')** angeordneten Umfangswand **(104)** und mit einem geschlossenen unteren Ende **(106)** und einem oberen Ende **(108),** die einen Umfang **(P)** mit der Umfangswand **(104)** definieren,
wobei ein oberer Abschnitt **(110)** des Behälters **(102)** das obere Ende **(108)** umfasst und mindestens ein Abschnitt der Umfangswand **(104)** angrenzend an das obere Ende **(108)** angepasst ist, um eine sich erstreckende bogenförmige Öffnung **(112)** teilweise entlang des Umfangs **(P)** zu definieren;
ein erstes Griffelement **(120),** das mit dem Behälter **(102)** verbunden und parallel zur Mittelachse **(AA')** angeordnet ist; und
**dadurch gekennzeichnet, dass**: ein Adapter **(126)** für ein zweites Griffelement **(130)** von einer Außenfläche **(128)** des geschlossenen unteren Endes **(106)** des Behälters **(102)** vorsteht und der Adapter **(126)** parallel zur Mittelachse **(AA')** ist.

2. Obsterntewerkzeug **(100)** nach Anspruch 1, **dadurch gekennzeichnet, dass** der Adapter **(126)** fluchtend mit der Mittelachse **(AA')** angeordnet ist.

3. Obsterntewerkzeug **(100)** nach einem der vorhergehenden Ansprüche, **dadurch gekennzeichnet, dass** ein Bodenabschnitt **(122)** des Behälters **(102)** angepasst ist, um eine Aussparung **(124)** parallel zur Mittelachse **(AA')** des Behälters **(102)** zu definieren.

4. Obsterntewerkzeug **(100)** nach Anspruch 3, **dadurch gekennzeichnet, dass** sich das erste Griffelement **(120)** innerhalb der Aussparung **(124)** befindet und parallel zur Mittelachse **(AA')** des Behälters **(102)** angeordnet ist.

5. Obsterntewerkzeug **(100)** nach einem der vorhergehenden Ansprüche, **dadurch gekennzeichnet, dass** der Adapter **(126)** wahlweise mit dem zweiten Griffelement **(130)** verbunden ist.

6. Obsterntewerkzeug **(100)** nach einem der vorhergehenden Ansprüche, **dadurch gekennzeichnet, dass** ein erster Abschnitt **(114)** der bogenförmigen Öffnung **(112)** parallel zur Mittelachse **(AA')** angeordnet ist, während ein zweiter Abschnitt **(116)** der bogenförmigen Öffnung **(112)** seitlich zur Mittelachse **(AA')** angeordnet ist.

7. Obsterntewerkzeug **(100)** nach einem der vorhergehenden Ansprüche, **dadurch gekennzeichnet, dass** das Obsterntewerkzeug **(100)** aus einem thermoplastischen Material besteht.

8. Obsterntewerkzeug **(100)** nach Anspruch 7, **dadurch gekennzeichnet, dass** das Obsterntewerkzeug **(100)** im Spritzgussverfahren hergestellt ist.

9. Obsterntewerkzeug **(100)** nach einem der vorhergehenden Ansprüche, **dadurch gekennzeichnet, dass** ein Bodenabschnitt **(122)** des Behälters **(102)** eine Vielzahl von Öffnungen umfasst, die in der Umfangswand **(104)** definiert sind, so dass benachbarte Öffnungen in einem vorgegebenen Abstand zueinander angeordnet sind.

10. Obsterntewerkzeug **(100)** nach Anspruch 9, **dadurch gekennzeichnet, dass** der Behälter **(102)** besteht aus:
einem Korb **(132),** der den Bodenabschnitt **(122)** des Behälters **(102)** bildet; und
einen Deckel **(134),** der den oberen Abschnitt **(110)** des Behälters **(102)** bildet.

11. Obsterntewerkzeug **(100)** nach Anspruch 10, **dadurch gekennzeichnet, dass** der Deckel **(134)** mit dem Korb **(132)** verbunden ist.

12. Obsterntewerkzeug **(100)** nach Anspruch 10, **dadurch gekennzeichnet, dass** das erste Griffelement **(120)** einstückig mit dem Deckel **(134)** ausgebildet ist.

13. Obsterntewerkzeug **(100)** nach Anspruch 10, **dadurch gekennzeichnet, dass** das erste Griffelement **(120)** einstückig mit dem Korb **(132)** ausgebildet ist.

14. Obsterntewerkzeug **(100)** nach Anspruch 10, **dadurch gekennzeichnet, dass** der Adapter **(126)** einstückig mit dem Deckel **(134)** ausgebildet ist.

15. Obsterntewerkzeug **(100)** nach einem der vorhergehenden Ansprüche, **dadurch gekennzeichnet, dass** das obere Ende **(108)** des Behälters **(102)** angrenzend an die bogenförmige Öffnung **(112)** angepasst ist, um mit einem gezackten Fruchtzupfaufsatz **(118)** in Eingriff zu kommen.

## Revendications

1. Un outil de récolte de fruits **(100)** comprenant :
un récipient **(102)** ayant une paroi circonférentielle **(104)** disposée autour d'un axe central **(AA')** et ayant une extrémité inférieure **(106)** fermée et une extrémité supérieure **(108)** définissant un périmètre **(P)** avec la paroi circonférentielle **(104)** ;
une partie supérieure **(110)** du récipient **(102)** comprenant l'extrémité supérieure **(108)** et au moins une partie de la paroi circonférentielle **(104)** adjacente à l'extrémité supérieure **(108)** étant adaptée pour définir une ouverture arquée **(112)** s'étendant en partie le long du périmètre **(P)** ;
un premier élément de manche **(120)** relié au récipient **(102)** et disposé de façon parallèle à l'axe central **(AA')** ; et
**caractérisé en ce que** : un adaptateur **(126)** pour un second élément de manche **(130)** fait saillie depuis une surface extérieure **(128)** de l'extrémité inférieure **(106)** fermée du récipient **(102)** et l'adaptateur **(126)** est parallèle à l'axe central **(AA').**

2. Outil de récolte de fruits **(100)** selon la revendication 1, **caractérisé en ce que** l'adaptateur **(126)** est disposé en alignement avec l'axe central **(AA').**

3. Outil de récolte de fruits **(100)** selon l'une quelconque des revendications précédentes, **caractérisé en ce qu'**une partie inférieure **(122)** du récipient **(102)** est adaptée pour définir un évidement **(124)** parallèle à l'axe central **(AA')** du récipient **(102).**

4. Outil de récolte de fruits **(100)** selon la revendication 3, **caractérisé en ce que** le premier élément de manche **(120)** est situé à l'intérieur de l'évidement **(124)** et disposé de façon parallèle à l'axe central **(AA')** du récipient (102).

5. Outil de récolte de fruits **(100)** selon l'une quelconque des revendications précédentes, **caractérisé en ce que** l'adaptateur **(126)** est relié de façon sélective au second élément de manche **(130).**

6. Outil de récolte de fruits **(100)** selon l'une quelconque des revendications précédentes, **caractérisé en ce qu'**une première partie **(114)** de l'ouverture arquée **(112)** est disposée de façon parallèle à l'axe central **(AA')** tandis qu'une seconde partie **(116)** de l'ouverture arquée **(112)** est disposée de façon latérale par rapport à l'axe central **(AA').**

7. Outil de récolte de fruits **(100)** selon l'une quelconque des revendications précédentes, **caractérisé en ce que** l'outil de récolte de fruits **(100)** est constitué d'un matériau thermoplastique.

8. Outil de récolte de fruits **(100)** selon la revendication 7, **caractérisé en ce que** l'outil de récolte de fruits **(100)** est fabriqué en utilisant un procédé de moulage par injection.

9. Outil de récolte de fruits **(100)** selon l'une quelconque des revendications précédentes, **caractérisé en ce qu'**une partie inférieure **(122)** du récipient **(102)** comprend une pluralité d'ouvertures définies dans la paroi circonférentielle **(104)** de sorte que les ouvertures adjacentes sont disposées à une distance prédéterminée les unes des autres.

10. Outil de récolte de fruits **(100)** selon la revendication 9, **caractérisé en ce que** le récipient **(102)** consiste en :
un panier **(132)** formant la partie inférieure **(122)** du récipient **(102)** ; et
un couvercle **(134)** formant la partie supérieure **(110)** du récipient **(102).**

11. Outil de récolte de fruits **(100)** selon la revendication 10, **caractérisé en ce que** le couvercle **(134)** est relié au panier **(132).**

12. Outil de récolte de fruits **(100)** selon la revendication 10, **caractérisé en ce que** le premier élément de manche **(120)** forme un seul tenant avec le couvercle **(134).**

13. Outil de récolte de fruits **(100)** selon la revendication 10, **caractérisé en ce que** le premier élément de manche **(120)** forme un seul tenant avec le panier **(132).**

14. Outil de récolte de fruits **(100)** selon la revendication 10, **caractérisé en ce que** l'adaptateur **(126)** forme un seul tenant avec le couvercle **(134).**

15. Outil de récolte de fruits **(100)** selon l'une quelconque des revendications précédentes, **caractérisé en ce que** l'extrémité supérieure **(108)** du récipient **(102)** adjacente à l'ouverture arquée **(112)** est adaptée pour s'engager avec un accessoire de cueillette de fruits à dents **(118).**
